(19) **Europäisches Patentamt European Patent Office Office européen des brevets**

(11) **EP 2 822 908 B1**

(12) **FASCICULE DE BREVET EUROPEEN**

(45) Date de publication et mention de la délivrance du brevet:
**26.12.2018 Bulletin 2018/52**

(21) Numéro de dépôt: **13709169.0**

(22) Date de dépôt: **04.03.2013**

(51) Int Cl.:
**C03C 17/34** *(2006.01)*    **C03C 17/36** *(2006.01)*
**E06B 3/66** *(2006.01)*

(86) Numéro de dépôt international:
**PCT/EP2013/054270**

(87) Numéro de publication internationale:
**WO 2013/131850 (12.09.2013 Gazette 2013/37)**

(54) **VITRAGE ISOLANT**

ISOLIERVERGLASUNG

INSULATING GLAZING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.03.2012 BE 201200142**

(43) Date de publication de la demande:
**14.01.2015 Bulletin 2015/03**

(73) Titulaire: **AGC Glass Europe**
**1348 Louvain-La-Neuve (BE)**

(72) Inventeurs:
• **DANNEELS, Sophie**
**B-1050 Bruxelles (BE)**

• **CLOSSET, François**
**B-4900 Spa (BE)**

(74) Mandataire: **Le Vaguerèse, Sylvain Jacques**
**AGC Glass Europe**
**Technovation Centre**
**IP Department**
**Rue Louis Blériot, 12**
**6041 Gosselies (BE)**

(56) Documents cités:
**EP-A1- 0 844 219    EP-A2- 1 293 726**
**WO-A1-03/007060    US-A- 4 206 252**
**US-A- 4 941 302    US-A1- 2006 005 484**
**US-A1- 2008 280 078**

**Description**

La présente invention concerne des vitrages présentant des propriétés isolantes thermiques. L'invention concerne en particulier les vitrages dont les propriétés sont liées à la présence de couches minces transparentes faisant office de filtres sélectifs des longueurs d'ondes transmises.

La production de vitrages offrant des propriétés dites bas-émissives constitue une part significative des améliorations visant à la réduction de la consommation énergétique pour le chauffage des bâtiments. La multiplication des feuilles de verre entrant dans la composition de tels vitrages isolants est un moyen d'améliorer leurs performances. Elle n'est pas toujours possible pour des raisons de poids ou d'encombrement. Dans les rénovations de bâtiment, le remplacement est largement conditionné par les châssis existant. Il est économiquement préférable de pouvoir réutiliser ces châssis et les vitrages restent le plus souvent des doubles vitrages. Pour ces derniers qui sont largement les plus utilisés, l'amélioration des performances des systèmes bas-émissifs utilisés demeure un objectif permanent. Par exemple, US 4 941 302 et US 2008/0280078 décrivent des vitrages isolants.

La réduction de l'émissivité ne doit pas altérer de manière significative les autres propriétés exigées des vitrages isolants considérés. En particulier les vitrages ne doivent pas présenter de coloration en réflexion non acceptable. A titre indicatif les vitrages doivent avoir une réflexion aussi neutre que possible et surtout ne pas présenter de coloration pourpre.

Pour ces vitrages, fonction de leur destination, les propriétés telles que la transmission lumineuse visible doit pouvoir s'adapter aux choix des utilisateurs. Si dans de nombreuses applications le souhait est de garder la transmission lumineuse la plus élevée possible, pour d'autres applications on recherche simultanément une protection contre le rayonnement solaire.

Dans les régions dans lesquelles l'ensoleillement nécessite le recours à la climatisation des bâtiments en période estivale, on s'efforce ainsi d'avoir des vitrages dont le facteur solaire (FS ou également g) doit bien être maîtrisé. Ce facteur solaire est la somme de l'énergie solaire transmise directement par le vitrage et de celle qui après absorption est réémise vers l'intérieur du bâtiment. Dans ces dernières applications la réduction de la transmission lumineuse contribue aussi à la réduction de la transmission énergétique, une part significative de l'énergie transmise l'étant par le rayonnement visible.

Dans la demande belge n° 2011/0164, non-publiée, déposée le 16 mars 2011 l'accent est mis sur les vitrages offrant une transmission lumineuse d'au moins 60%. La présente invention concerne des vitrages de structure analogue à celle de la demande précitée, offrant simultanément une transmission lumineuse limitée et un facteur solaire également limité.

Les propriétés recherchées sont principalement obtenues par l'application de systèmes de couches minces sur des vitrages doubles. Dans ces applications deux types principaux de couches sont mis en oeuvre sur les feuilles de verre. Il s'agit d'une part de couches obtenues par pyrolyse gazeuse. Ces couches sont essentiellement à base d'oxydes. D'autre part on utilise des systèmes de couches comportant une ou plusieurs couches métalliques réfléchissant sélectivement les infrarouges, couches métalliques faisant partie d'un ensemble comprenant par ailleurs des couches diélectriques protectrices et contrôlant la sélectivité des filtres constitués. Ces systèmes sont produits essentiellement par des techniques de pulvérisation cathodique.

Le choix des types de couches utilisés dans les vitrages isolants est fonction de multiples critères. Ainsi les couches pyrolytiques présentent l'avantage d'être obtenues directement sur les lignes de production du verre. Leur coût est bien moindre que celui des systèmes de couches déposées par pulvérisation cathodique. Par ailleurs les couches pyrolytiques sont relativement "dures". Elles offrent une bonne résistance aux épreuves mécaniques et/ou chimiques. Cependant ces couches ont des performances en matière d'émissivité qui restent très inférieures à celles des couches déposées par pulvérisation cathodique. A l'inverse ces couches déposées par pulvérisation cathodique sont fragiles. Elles sont qualifiées de « tendres » et doivent être protégées en conséquence.

L'amélioration de l'émissivité des couches déposées par pulvérisation cathodique conduit à des systèmes toujours plus complexes. Il s'agit notamment de la multiplication des couches métalliques réfléchissantes, et parallèlement, des couches diélectriques qui les accompagnent. Les systèmes les plus complexes ont pour conséquence un coût non négligeable qui doit être rapporté au gain obtenu en termes d'isolation.

Pour les raisons exposées ci-dessus une part significative des vitrages isolants est constituée des vitrages relativement simples comportant deux feuilles de verre dont l'une est revêtue d'un système de couches obtenu par pulvérisation cathodique avec un nombre limité de couches minces métalliques. Pour protéger ce système de couches, celui-ci est disposé sur une face d'une des feuilles qui n'est pas exposée aux aléas externes, et donc tournée vers l'espace situé entre les deux feuilles.

Les règlementations dans le domaine des économies d'énergie imposent la mise en oeuvre de vitrages sans cesse plus performants. Pour les vitrages isolants à deux feuilles de verre, les limites des possibilités d'amélioration des systèmes de couches sont de plus en plus difficiles à repousser. La recherche de nouvelles solutions reste ouverte.

Les inventeurs ont montré qu'une amélioration sensible des propriétés des vitrages offrant simultanément une émissivité limitée et un facteur solaire également limité pouvait être obtenue en mettant en oeuvre des vitrages tels que définis à la revendication 1.

Des ensembles de feuilles de verre dont une est revêtue d'un système de couches obtenu par pyrolyse, une autre d'un système de couches obtenu par pulvérisation cathodique, ont été proposées antérieurement. Ces feuilles de verre étaient destinées notamment à entrer dans la composition de portes de fours à usage domestique. Dans ces applications les feuilles en question faisaient partie d'un ensemble comprenant par exemple trois feuilles de verre dont au moins deux présentaient cette structure. Dans ces applications, la propriété essentielle est bien entendu de faire écran au rayonnement infrarouge en provenance du four. Le facteur solaire pour ces applications est dépourvu de toute signification. De même la qualité optique de ces produits n'est pas comparable à celle exigée des vitrages architecturaux. En particulier le voile ("haze") correspondant à la fraction de la lumière diffusée par le vitrage peut être significativement plus important. De même encore les colorations en réflexion sont souvent minorées par l'utilisation pour la feuille de verre la plus extérieure par rapport au four, d'un verre fortement coloré.

Pour ces raisons les propriétés requises pour ces applications sont beaucoup moins contraignantes que celles des vitrages architecturaux, et les techniques de préparation peuvent suivre des modalités relativement simples.

Par opposition à ces propositions antérieures, les vitrages selon l'invention destinés aux applications « bâtiment », offrent un facteur solaire limité. Ce facteur doit tenir compte de l'absorption liée à la nature et à l'épaisseur des feuilles de verre. Pour des feuilles de verre clair de 4mm d'épaisseur le facteur solaire du vitrage double n'est pas supérieur à 35%, mesure effectuée pour un illuminant D65 sous un angle de 2°. Pour des épaisseurs différentes cette valeur doit être corrigée de l'absorption propre du verre à ces épaisseurs. La transmission lumineuse de ces vitrages mesurée selon la norme EN 410 est au plus de 50% et de préférence comprise entre 25 et 50%.

Toujours vis-à-vis des techniques antérieures, les vitrages selon l'invention doivent présenter un voile aussi réduit que possible et dans tous les cas ce voile ne doit pas être supérieur à 0,7% et de préférence pas supérieur à 0,5% (mesuré par exemple selon la norme ASTM D1003-92).

L'ensemble de couches pyrolytiques est obtenu de façon traditionnelle dans les installations de production de verre "flotté", en appliquant les précurseurs de ces couches directement sur le ruban de verre sortant du « float » à température élevée.

Les couches pyrolytiques obtenues à la sortie de l'unité de pyrolyse présentent une certaine rugosité. Du fait même de leur rugosité superficielle ces couches présentent aussi ordinairement un voile non négligeable. Ce voile n'est pratiquement pas gênant dans les vitrages utilisés dans les appareils domestiques, il en va différemment pour l'architectural. Pour atténuer ces irrégularités de surface, il est connu de procéder à un polissage de ces couches. A l'expérience, la mise en oeuvre d'un tel polissage permet, selon l'invention, de réduire l'ampleur de ces rugosités de façon qu'elles ne compromettent pas les performances des vitrages considérés.

Selon l'invention il est donc souhaitable une fois la couche pyrolytique constituée, de soumettre cette couche au polissage. Le polissage de la couche pyrolytique est avantageusement tel que la rugosité Ra après polissage n'est pas supérieure à 10nm et de préférence pas supérieure à 6nm.

Dans la pratique le polissage réduit sensiblement le voile introduit par la présence de la couche pyrolytique. Initialement, selon les couches pyrolytiques considérées, ce voile se situe environ entre 0,4 et 0,8% de la lumière transmise. S'il est admis communément que les vitrages pour les applications architecturales ne doivent pas présenter un voile supérieur à 0,7%, le polissage effectué dans les conditions connues permet de ramener le voile de préférence à une valeur égale ou inférieure à 0,5% et de préférence égale ou inférieure à 0,3%.

Pour parvenir aux meilleures performances il est nécessaire dans les vitrages selon l'invention de mettre en oeuvre simultanément les meilleures couches pyrolytiques et les meilleures couches déposées par pulvérisation cathodique. Pour les couches pyrolytiques on utilise avantageusement une couche à base d'oxyde d'étain dopé. De manière connue l'agent dopant est soit du fluor soit de l'antimoine.

Toujours de manière connue, la couche d'oxyde d'étain dopé doit présenter une certaine épaisseur. Cette épaisseur garantit une action sélective sur les infrarouges tout en permettant de maintenir une bonne neutralité de couleur en réflexion. Cette épaisseur est d'au moins 200nm, mais la neutralité n'est au mieux que pour des épaisseurs discrètes qui peuvent varier en fonction de la nature exacte de la composition de ces couches.

Pour améliorer notamment la neutralité en réflexion des couches pyrolytiques et favoriser la transmission lumineuse, il est connu d'associer à la couche constituant le filtre infrarouge, au moins une autre couche située sous la première et d'indice de réfraction intermédiaire entre celui du substrat verrier et celui de la couche filtrant sélectivement les infrarouges. Ces couches favorisent notamment la neutralisation et la suppression des variations de teintes selon l'angle d'observation. Des couches traditionnelles connues sont constituées d'oxydes, ou de combinaisons de couches d'oxydes, notamment d'ensembles de couches d'oxyde de titane et d'oxyde de silicium, ou d'oxyde d'étain et d'oxyde de silicium, ou d'oxy-carbure de silicium SiOxCy. Ces couches, ou ensembles de couches, sont également produits par pyrolyse directe sur le ruban de verre dans les installations de flottage ou à la sortie de celles-ci.

Les meilleures dispositions concernant les couches pyrolytiques, telles que celles indiquées ci-dessus, conduisent pour ces systèmes à des valeurs d'émissivité qui pour une application sur une feuille de verre flotté claire ordinaire de 4mm d'épaisseur ne sont pas supérieures à 0,20 et de préférence pas supérieures à 0,15, et de façon particulièrement préférée égales ou inférieures à 0,10. Les systèmes "low-e" (bas-émissifs) pyrolytiques les plus usuels comportent une couche d'oxyde d'étain dopé, déposée sur une première couche ayant pour rôle de neutraliser la couleur en réflexion. La couche au contact du verre est ordinairement une couche de silice (ou d'oxy-carbure de silicium) éventuellement modifiée par des additifs. Les couches d'oxyde d'étain comparées aux couches des systèmes déposés par pulvérisation cathodique, sont relativement épaisses, plus de 200nm, et pour certaines plus de 450nm. Ces couches épaisses sont suffisamment résistantes pour supporter d'être exposées à des épreuves mécaniques et/ou chimiques. Contrairement aux couches déposées par pulvérisation cathodique elles ne sont pas nécessairement enfermées dans un double vitrage. Leurs performances en matière d'émissivité sont bien moindres que celles des couches déposées par pulvérisation cathodique comportant au moins une couche métallique. Les coefficients U pour les plus performantes sont de l'ordre de 0,15, ou au mieux 0,10. Pour cette raison les couches pyrolytiques lorsqu'elles sont seules, ne sont pas recherchées pour les vitrages qui doivent atteindre des émissivités extrêmes.

Comme indiqué plus haut il est nécessaire de constituer un ensemble par pulvérisation cathodique qui soit aussi performant que possible en matière d'émissivité et maintienne le facteur solaire relativement limité. Des systèmes correspondant sont notamment ceux comprenant deux ou trois couches d'argent étant entendu que la multiplication des couches d'argent a pour principal avantage d'accroître la sélectivité. En contrepartie, l'accroissement de la quantité d'argent par unité de surfa ce, augmente le coût de l'ensemble. De préférence les systèmes utilisés ont une épaisseur totale d'argent qui n'est pas supérieure à 40nm et de préférence pas supérieure à 35nm.

Les systèmes de couches obtenus par pulvérisation cathodique qui sont simultanément neutres en réflexion et présentent les meilleures émissivités, permettent d'atteindre des émissivités égales ou inférieures à 0,02, avantageusement inférieures à 0,015 et pour les plus performantes inférieures à 0,01. Dans tous les cas ces systèmes sont très sensiblement plus efficaces que les systèmes pyrolytiques dont il est question ci-dessus.

La combinaison des systèmes de couches selon l'invention permet d'atteindre des valeurs de coefficients thermiques particulièrement bas.

Pour les produits selon l'invention il est important que dans leur simplicité relative, ils permettent d'améliorer les performances atteintes avec des produits de structure analogue. La présence des deux systèmes de couches sur les deux feuilles de verre, lorsque les systèmes en question sont optimisés, permet déjà de réaliser un produit à coefficient thermique U très faible, ceci avec un gaz isolant « usuel » comme l'argon. Les inventeurs ont encore constaté qu'une amélioration supplémentaire pouvait être atteinte en remplaçant cet argon par du krypton, mais surtout en faisant en sorte que la proportion d'air dans le gaz isolant soit aussi réduite que possible.

Dans les vitrages isolants les plus usuels, les certifications des performances sont établies pour un gaz isolant constitué pour au moins 90% d'argon. Aucune prescription n'est donnée en ce qui concerne le gaz complémentaire entrant dans la composition. En d'autres termes, le remplissage du vitrage à l'argon est conduit à partir d'une atmosphère d'air, et le gaz complémentaire de l'argon est nécessairement de l'air.

Les inventeurs ont établi que la présence d'air, même en proportion limitée est un facteur sensible qui pénalise les performances possibles correspondant au gaz isolant. Les inventeurs ont donc proposé un mode dans lequel la proportion d'air est la plus restreinte possible et dans tous les cas ne dépasse pas 5% en volume, et de préférence est au plus de 3% et de façon particulièrement préférée peut être inférieure ou égale à 1%.

Pour être efficace la proportion de krypton doit être le plus élevée possible. Selon l'invention elle n'est pas inférieure à 86%, de préférence pas inférieure à 88%, et de façon particulièrement préférée pas inférieure à 90%.

Le choix du krypton comme gaz isolant, permet d'améliorer les produits selon l'invention. La difficulté est de faire en sorte de limiter le volume de krypton utilisé pour ce remplissage en raison du coût de ce gaz. En pratique le remplissage du vitrage en chassant progressivement l'air présent initialement par le krypton jusqu'à atteindre les proportions d'air indiquées ci-dessus, peut conduire à utiliser un excès de krypton par rapport au volume utile de ce gaz dans le produit final.

Pour réduire le coût de l'opération, en respectant les proportions de krypton et d'air prescrites selon l'invention, les inventeurs proposent de manière préférée de procéder au remplissage en gaz isolant en deux temps. Dans un premier temps l'air est chassé par de l'argon jusqu'à réduire de façon significative l'air encore présent. Dans un deuxième temps l'argon et l'air résiduel sont chassés par le krypton.

Dans cette manière il est possible d'abaisser significativement la proportion d'air dans le produit final qui se compose alors pour l'essentiel de krypton, d'une très faible proportion d'air, et le complément étant constitué d'argon. Ce dernier même moins bon isolant que le krypton demeure néanmoins un isolant important contrairement à l'air.

Dans les vitrages isolants, l'optimisation des performances passe encore par la distance séparant les deux feuilles de verre. Le choix de la distance tient compte non seulement de la conduction du gaz isolant, mais aussi des particularités des mécanismes de convection propres au gaz en question. Plus la distance est grande plus la conduction est réduite. A l'inverse, l'accroissement de la distance accroît la convection. La combinaison de ces deux facteurs conduit an un optimum de distance. Pour les vitrages dont le gaz est essentiellement de l'argon les distances traditionnelles sont de l'ordre de 15mm. Pour le krypton l'expérience montre que l'optimum correspond à une distance moindre. En conséquence selon l'invention la distance entre les feuilles de verre du vitrage comportant essentiellement du krypton comme gaz isolant, se situe de préférence entre 6 et 15mm et de préférence entre 8 et 12mm. Une distance de l'ordre de 10mm est le meilleur compromis pour les teneurs en krypton selon l'invention.

Le fait que la distance soit moindre avec le krypton limite l'importance du coût lié à l'utilisation de ce gaz.

Les classifications commerciales des vitrages sont l'objet de normes, et sont généralement basées sur les valeurs des coefficients U. Les vitrages selon l'invention permettent de franchir des seuils jusqu'alors inaccessibles pour les vitrages doubles du type considéré. Ainsi pour un vitrage composé de deux feuilles de verre clair de 4mm d'épaisseur chacune, distantes de 10mm, l'espace étant rempli d'un mélange gazeux comportant 86% de krypton et moins de 5% d'air, les coefficients U atteints selon l'invention peuvent être inférieurs ou égaux à 0,85W/m$^2$.K (norme EN 673), et même inférieurs ou égaux à 0,8W/m$^2$.K.

La proportion de krypton dans le gaz isolant est de préférence supérieure à 90% en volume pour atteindre les meilleures performances.

Le choix de la nature des couches et de leurs épaisseurs est tel qu'avec un illuminant D65 et sous 2°, pour deux feuilles de verre clair de 4mm d'épaisseur, les vitrages selon l'invention présentent en réflexion vers l'extérieur des coordonnées colorimétriques dans le système CIELab qui sont avantageusement telles que:

$$- 5 \leq a^* \leq 3$$

$$- 10 \leq b^* \leq 3.$$

L'invention est décrite de manière détaillée dans les exemples suivants.

Les systèmes bas-émissifs obtenus par pulvérisation cathodique utilisés peuvent comporter plusieurs couches métalliques réfléchissantes. Le gain en terme de propriété bas-émissive est relativement limité par rapport aux meilleurs systèmes ne comportant qu'une couche métallique. Le bénéfice de la pluralité de couches métalliques réside dans une meilleure sélectivité jointe à un bon contrôle de la neutralité de couleur en réflexion.

Dans les conditions optimisées des systèmes de couches avantageux sont par exemple tels que ceux décrits dans la publication WO 2006/122900, et notamment présentant la structure générale:
verre/ ZSO/Ag/TiOx/ZSO/Ag/TiOx/ZSO

Dans cette structure ZSO est un stanate de zinc éventuellement comprenant deux types de couches dont une présentant des quantités limitées de zinc, de l'ordre de 5% en poids.

Un autre type de systèmes de couches avantageux peut comprendre trois couches d'argent comme ceux faisant l'objet de la demande de brevet non-publiée PCT/EP2011/058540, et présentant une structure de type :
verre/ZSO/Ag/TiOx/ZSO/Ag/TiOx/ZSO/Ag/TiOx/ZSO

Exemple 1

Une feuille de verre clair de 3,85mm d'épaisseur revêtue par pulvérisation cathodique d'un système de couches, tel que :
verre/ZSO5+ZnO(37,5nm)/Ag(9nm)/TiOx(3nm)/ZSO5+ZnO(85nm)/ Ag(19nm)/Ti(2nm)+TiO$_2$(3nm)/ZSO5(30nm)

Dans ce système les premiers diélectriques sont constitués d'une couche de stanate de zinc à faible teneur en zinc (5%) suivie d'une couche d'oxyde de zinc. Cette dernière de manière connue a pour fonction de favoriser la formation d'une couche d'argent présentant la meilleure conductivité pour une quantité d'argent déterminée. La couche de ZnO peut être remplacée par une couche de stanate de zinc à forte teneur en zinc (de l'ordre de 90%). Ce type de couche est noté ZSO9.

Les couches « barrières » à base de titane ont deux fonctions dans les empilages considérés, d'une part elles protègent l'argent contre les oxydations qui peuvent se produire au cours des dépôts réactifs ultérieurs, d'autre part ces couches ont un rôle d'absorption lumineuse. Cette absorption est le fait de la fraction du titane non oxydé. Dans les systèmes de couches la notation « TiOx » est utilisée pour rendre compte de l'existence d'une couche incomplètement oxydée. Selon, l'épaisseur de la couche à base de titane et la valeur de x, le produit est plus ou moins absorbant, étant entendu que son rôle protecteur de l'argent est toujours présent. La notation utilisée dans l'empilage présenté ci-dessus (Ti+TiO$_2$) n'a pour but que de souligner les deux rôles assignés au titane qui expliquent que ces couches globalement présentent une épaisseur supérieure à celle habituelle pour la fonction de protection seule.

Les couches à base de titane sont produites à partir de cathodes soit métallique soit céramiques. L'utilisation de cathodes céramiques permet de mieux contrôler l'état final des couches et peut être préféré lorsque celles-ci sont les moins épaisses, autrement dit lorsque le rôle est principalement de protection de l'argent. Pour les systèmes plus épais le choix peut être indifféremment d'utiliser des cathodes céramiques, avec une teneur en oxygène plus ou moins importante, ou d'utiliser des cathodes métalliques dans des conditions qui conduisent à une oxydation contrôlée pour conférer les deux types de fonction indiquées.

La couche superficielle dite $TiO_2$ est une couche de protection. Dans cette fonction elle est totalement oxydée.

Un double vitrage est constitué de deux feuilles de verre de 3,85mm l'une étant revêtue de la couche pyrolytique précédente en position 4, et l'autre de l'empilage de couches obtenu par pulvérisation cathodique présenté ci-dessus, en position 2. Les deux feuilles sont distantes de 15mm. L'espace entre ces feuilles est rempli d'argon à 90% le reste étant pratiquement de l'argon pour environ 9% et de l'ordre de 1% d'air.

Le vitrage ainsi constitué permet d'atteindre un coefficient de transmission thermique U de 0,85, défini selon la norme EN 673, avec un facteur solaire de 27,4%. La transmission lumineuse est de 45,6%.

Les coordonnées colorimétriques sont exprimées dans le système CIELab pour l'illuminant D65 sous 2°.

Les propriétés sont celles indiquées à l'exemple 1 du tableau.

Tableau 1.

| exemple | TL | Rext. | TE | RE | SF(g) | TL/g | a* | b* |
|---|---|---|---|---|---|---|---|---|
| 1 | 45,6 | 20 | 23,3 | 36 | 27,4 | 1,66 | -2,5 | -8,9 |
| 2 | 33,2 | 31,7 | 17,8 | 43,7 | 21,4 | 1,55 | -1,9 | -7,6 |
| 3 | 44,2 | 19,3 | 19 | 46,9 | 22,2 | 1,99 | -5,3 | -13,2 |

Les propriétés de transmission visible, TL, et de réflexion vers l'extérieur, Rext., sont données pour un illuminant D65 sous 2°. Les propriétés énergétiques de transmission, TE, de réflexion, RE, d'absorption. Le facteur solaire, g, est mesuré selon la norme EN 410. Le rapport TL/g mesure la sélectivité du vitrage. Le coefficient de transmission thermique U, est exprimé en $W/m^2.K$.

Exemple 2.

Pour cet exemple le système de couches obtenu par pulvérisation cathodique est modifié de la façon suivante :
verre/ZSO5+ZnO(39nm)/Ag(9nm)/TiOx(6nm)/ZSO5+ZnO(90nm)/Ag
+Pd(26nm)/Ti(2nm)+$TiO_2$(6nm)/ZSO5(25nm)/$TiO_2$(3,5nm)

La présence de palladium associé en faible proportion (2%) à l'argent a pour but d'accroître l'absorption du système pour diminuer le facteur solaire.

La couche pyrolytique en position 4 est la même que celle de l'exemple 1.

Les propriétés sont reportées au tableau précédent.

Exemple 3.

Dans cet exemple le système de couches déposé par pulvérisation cathodique comporte trois couches d'argent.

Comme pour les exemples précédents la couche en position 4 est inchangée, et les épaisseurs des feuilles et la nature du gaz remplissant le vitrage reste le même.

Le système de couches déposé par pulvérisation cathodique est :
verre/ZSO5+ZnO(40nm)/Ag(15nm)/Ti(2nm)+$TiO_2$(3nm)/ZSO5+ZnO
(70nm)/Ag10nm/TiOx((3nm)ZSO5+ZnO(40nm)/Ag(10nm)/$TiO_x$(3nm)/ZSO5 (25nm)/$TiO_2$(3,5nm)

Les propriétés du vitrage sont reportées au tableau précédent.

La disposition selon l'invention permet bien d'atteindre un coefficient U, particulièrement bas avec un facteur solaire également bas. Les vitrages sont donc à la fois très performants pour l'isolation des bâtiments, mais aussi pour leurs propriétés antisolaires.

**Revendications**

1. Vitrage double isolant comprenant une feuille de verre qui présente sur la face 2 un ensemble de couches dites basse-émissives, produites par pulvérisation cathodique et comprenant au moins une couche métallique réfléchissant les infrarouges, l'autre feuille de verre comportant sur la face 4 une ou plusieurs couches d'oxydes métalliques déposées par pyrolyse gazeuse, l'espace situé entre les feuilles étant clos et rempli de gaz isolant composé de krypton pour au moins 86% en volume et au plus 5% d'air, ce vitrage présentant un facteur solaire au plus égal à 35% pour des épaisseurs des feuilles de verre clair de 4 mm.

**2.** Vitrage selon la revendication 1 dans lequel la transmission lumineuse est au plus égale à 50%.

**3.** Vitrage selon la revendication 1 dans lequel dans l'espace entre les deux feuilles de verre la teneur en krypton est d'au moins 88%, et la teneur en air est d'au plus 3% en volume.

**4.** Vitrage selon la revendication 1 dans lequel dans l'espace entre les deux feuilles de verre la teneur en krypton est d'au moins 90%, et la teneur en air est d'au plus 1% en volume.

**5.** Vitrage selon l'une des revendications précédentes dans lequel le voile est inférieur à 0,7% et de préférence est inférieur à 0,5%.

**6.** Vitrage selon l'une des revendications précédentes dans lequel le revêtement pyrolytique comprend une couche d'oxyde d'étain dopé à l'antimoine ou au fluor.

**7.** Vitrage selon la revendication 6, dans lequel au moins une couche de SiOxCy, ou un ensemble de couches $TiO_2$. $SiO_2$ ou un ensemble $SnO_2$. $SiO_2$ est interposée entre la feuille de verre et la couche d'oxyde d'étain dopé.

**8.** Vitrage selon la revendication 7 dans lequel l'épaisseur de la couche pyrolytique n'est pas inférieure à 200nm.

**9.** Vitrage selon la revendication 7 dont la surface de la couche pyrolytique présente une rugosité Ra inférieure à 10nm.

**10.** Vitrage selon l'une des revendications précédentes dans lequel l'ensemble de couches déposé par pyrolyse est tel que l'émissivité d'une feuille de 4mm de verre clair, revêtue d'un tel ensemble soit au plus égale à 0,20, et de préférence au plus égal à 0,15 et de préférence égale ou inférieure à 0,10.

**11.** Vitrage selon l'une des revendications précédentes dans lequel l'ensemble de couches déposé par pulvérisation cathodique est tel que l'émissivité d'une feuille de verre clair de 4mm revêtue d'un tel ensemble soit au plus égale à 0,02 et de préférence au plus égale à 0,015.

**12.** Vitrage selon la revendication 11 dans lequel l'ensemble de couches déposées par pulvérisation cathodique comprend plusieurs couches à base d'argent dont l'épaisseur totale n'est pas supérieure à 40nm et de préférence au plus de 35nm.

**13.** Vitrage selon l'une des revendications précédentes dans lequel le gaz isolant en dehors du krypton et de l'air est constitué d'argon.

**14.** Vitrage selon l'une des revendications précédentes dans lequel les feuilles de verre sont distantes de 6 à 15mm, et de préférence de 8 à 12mm.

**15.** Vitrage selon l'une des revendications précédentes dont le coefficient $\underline{U}$ est au plus égal à 0,85 et de préférence au plus égal à 0,8.

**16.** Vitrage selon l'une des revendications précédentes dans lequel la coloration en réflexion est telle que dans le système CIELAB sous un illuminant D65 et sous 2°, les coordonnées colorimétriques sont telles que :

$$- 5 \leq a^* \leq 3$$

$$- 10 \leq b^* \leq 3$$

**Patentansprüche**

**1.** Zweifachisolierverglasung, umfassend eine Glasscheibe, die auf der Seite 2 eine Gesamtheit von so genannten niedrig emittierenden Schichten aufweist, die durch Kathodenzerstäubung hergestellt sind, und umfassend mindestens eine IR-reflektierende Metallschicht, wobei die andere Glasscheibe auf der Seite 4 eine oder mehrere Metalloxidschichten umfasst, die durch Gasphasenpyrolyse aufgebracht sind, wobei der Raum zwischen den Scheiben geschlossen und mit Isoliergas gefüllt ist, das aus Krypton zu mindestens 86 Vol.-% und höchstens 5 % Luft besteht, wobei diese Verglasung einen Sonnenschutzfaktor höchstens gleich 35 % für Dicken der Klarglasscheiben von 4 mm aufweist.

2. Verglasung nach Anspruch 1, bei der die Lichtübertragung höchstens gleich 50 % ist.

3. Verglasung nach Anspruch 1, bei der in dem Raum zwischen den zwei Glasscheiben der Kryptongehalt mindestens 88 % und der Luftgehalt höchstens 3 Vol.-% ist.

4. Verglasung nach Anspruch 1, bei der in dem Raum zwischen den zwei Glasscheiben der Kryptongehalt mindestens 90 % und der Luftgehalt höchstens 1 Vol.-% ist.

5. Verglasung nach einem der vorhergehenden Ansprüche, bei der der Schleier geringer als 0,7 % und vorzugsweise geringer als 0,5 % ist.

6. Verglasung nach einem der vorhergehenden Ansprüche, bei der die pyrolytische Beschichtung eine Zinnoxidschicht umfasst, die mit Antimon oder Fluor dotiert ist.

7. Verglasung nach Anspruch 6, bei der mindestens eine SiOxCy-Schicht oder eine Gesamtheit von $TiO_2$-$SiO_2$-Schichten oder eine Gesamtheit von $SnO_2$-$SiO_2$-Schichten zwischen der Glasscheibe und der dotierten Zinnoxidschicht zwischengefügt ist.

8. Verglasung nach Anspruch 7, bei der die Dicke der pyrolytischen Schicht nicht kleiner als 200 nm ist.

9. Verglasung nach Anspruch 7, deren Oberfläche der pyrolytischen Schicht eine Ravigkeit Ra von weniger als 10 nm aufweist.

10. Verglasung nach einem der vorhergehenden Ansprüche, bei der die Gesamtheit von durch Pyrolyse aufgebrachten Schichten derart ist, dass das Emissionsvermögen einer Klarglasscheibe von 4 mm, die mit einer solchen Gesamtheit beschichtet ist, höchstens gleich 0,20 und vorzugsweise höchstens gleich 0,15 und vorzugsweise gleich oder niedriger als 0,10 ist.

11. Verglasung nach einem der vorhergehenden Ansprüche, bei der die Gesamtheit von Schichten, die durch Kathodenzerstäubung aufgebracht sind, derart ist, dass das Emissionsvermögen einer Klarglasscheibe von 4 mm, die mit einer solchen Gesamtheit beschichtet ist, höchstens gleich 0,02 und vorzugsweise höchstens gleich 0,015 ist.

12. Verglasung nach Anspruch 11, bei der die Gesamtheit der durch Kathodenzerstäubung aufgebrachten Schichten mehrere Schichten auf Basis von Silber umfasst, deren Gesamtdicke nicht größer als 40 nm und bevorzugt höchstens 35 nm ist.

13. Verglasung nach einem der vorhergehenden Ansprüche, bei der das Isoliergas abgesehen von dem Krypton und der Luft von Argon gebildet ist.

14. Verglasung nach einem der vorhergehenden Ansprüche, bei der die Glasscheiben 6 bis 15 mm und vorzugsweise 8 bis 12 mm beabstandet sind.

15. Verglasung nach einem der vorhergehenden Ansprüche, deren Koeffizient U höchstens gleich 0,85 und vorzugsweise höchstens gleich 0,8 ist.

16. Verglasung nach einem der vorhergehenden Ansprüche, bei der die Färbung bei Reflexion derart ist, dass in dem System CIELAB unter einem Leuchtkörper D65 und unter 2° die kolorimetrischen Daten derart sind, dass:

$$-5 \leq a^* \leq 3$$

$$-10 \leq b^* \leq 3$$

**Claims**

1. Insulating double glazing comprising a glass sheet which exhibits, on the face 2, a set of "low-e" layers which are produced by cathode sputtering and which comprise at least one infrared-reflecting metal layer, the other glass sheet comprising, on the face 4, one or more layers of metal oxides which are deposited by gas pyrolysis, the space located between the sheets being closed and filled with insulating gas composed of krypton for at least 86% by volume and at most 5% of air, this glazing exhibiting a solar factor at most equal to 35% for thickness of the clear glass sheets of 4 mm.

2. Glazing according to Claim 1, in which the light transmission is at most equal to 50%.

3. Glazing according to Claim 1, in which, in the space between the two glass sheets, the krypton content is at least 88% and the air content is at most 3% by volume.

4. Glazing according to Claim 1, in which, in the space between the two glass sheets, the krypton content is at least 90% and the air content is at most 1% by volume.

5. Glazing according to one of the preceding claims, in which the haze is less than 0.7% and is preferably less than 0.5%.

6. Glazing according to one of the preceding claims, in which the pyrolytic coating comprises a layer of tin oxide doped with antimony or with fluorine.

7. Glazing according to Claim 6, in which at least one $SiOxCy$ layer or a set of $TiO2.SiO2$ layers or an $SnO2.SiO2$ set is interposed between the glass sheet and the layer of doped tin oxide.

8. Glazing according to Claim 7, in which the thickness of the pyrolytic layer is not less than 200 nm.

9. Glazing according to Claim 7, the surface of the pyrolytic layer of which exhibits a roughness Ra of less than 10 nm.

10. Glazing according to one of the preceding claims, in which the set of layers which is deposited by pyrolysis is such that the emissivity of a 4-mm sheet of clear glass, coated with a such a set, is at most equal to 0.20 and preferably at most equal to 0.15 and preferably equal to or less than 0.10.

11. Glazing according to one of the preceding claims, in which the set of layers which is deposited by cathode sputtering is such that the emissivity of a 4-mm sheet of clear glass, coated with such a set, is at most equal to 0.02 and preferably at most equal to 0.015.

12. Glazing according to Claim 11, in which the set of the layers which are deposited by cathode sputtering comprises several silver-based layers, the total thickness of which is not greater than 40 nm and preferably at most 35 nm.

13. Glazing according to one of the preceding claims, in which the insulating gas, apart from the krypton and the air, is formed of argon.

14. Glazing according to one of the preceding claims, in which the glass sheets are from 6 to 15 mm apart and preferably from 8 to 12 mm apart.

15. Glazing according to one of the preceding claims, the U coefficient of which is at most equal to 0.85 and preferably at most equal to 0.8.

16. Glazing according to one of the preceding claims, in which the colouration in reflection is such that, in the CIELAB system under a D65 illuminant and under 2°, the colourimetric coordinates are such that:

$$-5 \leq a^* \leq 3$$

$$-10 \leq b^* \leq 3$$

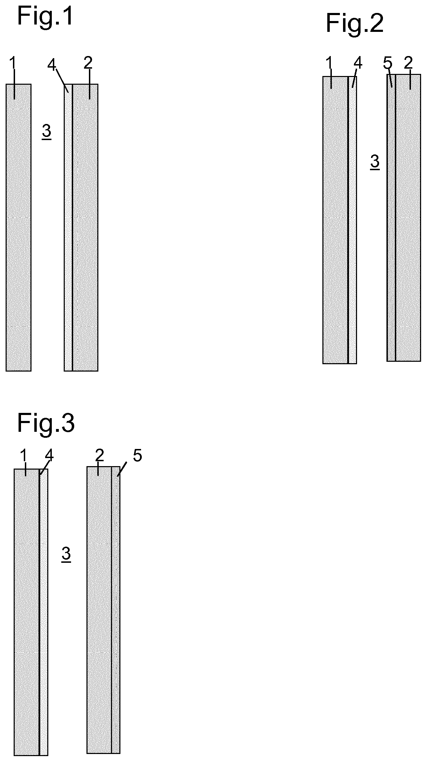

Fig.1

Fig.2

Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4941302 A
- US 20080280078 A
- BE 20110164
- WO 2006122900 A
- EP 2011058540 W